(19) Europäisches Patentamt
European Patent Office
Office européen des brevets

(11) **EP 3 904 773 A1**

(12) **EUROPEAN PATENT APPLICATION**
published in accordance with Art. 153(4) EPC

(43) Date of publication:
**03.11.2021 Bulletin 2021/44**

(51) Int Cl.:
***F24D 3/00*** *(2006.01)*

(21) Application number: **18944376.5**

(22) Date of filing: **27.12.2018**

(86) International application number:
**PCT/JP2018/048154**

(87) International publication number:
**WO 2020/136806 (02.07.2020 Gazette 2020/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mitsubishi Electric Corporation
Tokyo 100-8310 (JP)**

(72) Inventor: **MAITANI, Hiroshi
Tokyo 100-8310 (JP)**

(74) Representative: **Trinks, Ole
Meissner Bolte Patentanwälte
Rechtsanwälte Partnerschaft mbB
Widenmayerstraße 47
80538 München (DE)**

(54) **HEATING SYSTEM**

(57)     A heating system includes a heating terminal, a circulation pump, and a heating device that are connected by pipes to configure a heat medium flow path through which heat medium circulates. The heating terminal is configured to cause heat exchange to be performed between air in an air-conditioned space and the heat medium. The circulation pump is configured to apply pressure to the heat medium. The heating device is configured to heat the heat medium. The heating system includes a supply temperature sensor configured to detect a supply heat medium temperature that is a temperature of the heat medium flowing from the heating device to the heating terminal, a return temperature sensor configured to detect a return heat medium temperature that is a temperature of the heat medium flowing from the heating terminal to the heating device, a room temperature sensor configured to detect a room temperature that is a temperature of the air-conditioned space, and a controller configured to control the heating device and the circulation pump. The controller controls a rotation speed of the circulation pump based on a temperature difference between the return heat medium temperature and the room temperature, and deviation between the supply heat medium temperature and a set target supply heat medium temperature.

FIG. 1

**Description**

TECHNICAL FIELD

The present invention relates to a heating system that heats an air-conditioned space by circulating high-temperature water, and particularly to improvement in efficiency of the heating system.

BACKGROUND ART

A hot water heating system that causes a heated water or other fluids to pass through a heating terminal such as a radiator, a floor heater, and a fan coil unit, thereby heating an indoor air-conditioned space has been disclosed. The fluid passing through the heating terminal is described as water, for example. A heat pump hot water heating system uses, as a heating device heating the water, a heat pump device using heat obtained from a heat source such as air, water, and underground. The heat pump device, the heating terminal, and a circulation pump are connected by pipes to configure a hot water flow path, and the circulation pump is driven to circulate the water, thereby supplying an amount of heat to the heating terminal.

Such a hot water heating system controls a supply hot water temperature that is a temperature of the water flowing from the heat pump device to the heating terminal based on a difference between a room temperature as an indoor temperature and a set room temperature, and supplies the necessary amount of heat for maintenance of the room temperature. The supply hot water temperature is controlled to coincide with a target supply hot water temperature determined based on the room temperature. For example, when the room temperature is lower than the set room temperature, the supply hot water temperature is increased to increase a supply heat amount. When the room temperature is higher than the set room temperature, the supply hot water temperature is lowered to reduce the supply heat amount.

When a return hot water temperature is increased, a coefficient of performance (COP) of the heat pump device heating the water is lowered because a condensing temperature in a refrigeration cycle is increased.

In the heat pump heating system, to avoid lowering of the COP in the heat pump device serving as the heating device, target values of both of the supply hot water temperature and the return hot water temperature are determined. Further, after behavior of the supply hot water temperature is stabilized, a rotation speed of the circulation pump is controlled to make the return hot water temperature coincide with the target return hot water temperature. More specifically, in a case where the return hot water temperature is higher than the target return hot water temperature, the rotation speed of the circulation pump is reduced.

In a case where the return hot water temperature is lower than the target return hot water temperature, the rotation speed of the circulation pump is increased (for example, see Patent Literature 1). The target return hot water temperature is set by, for example, a user through a remote control, or is preferably set to 34 °C to 45 °C, more preferably set to 34 °C to 36 °C.

There is also a heating system in which flow control valves are provided in respective heating terminals, opening degrees of the flow control valves realizing an appropriate flow rate during multisystem simultaneous operation are determined in test operation, and data of the opening degrees are stored as an opening degree set table (for example, see Patent Literature 2). The heating system controls the flow rate of water passing through the heating terminals such that the return temperature becomes an appropriate low temperature not lowering efficiency of a heat source apparatus, based on the data of the opening degree set table.

CITATION LIST

PATENT LITERATURE

Patent Literature 1: Japanese Unexamined Patent Application Publication JP 2012-163275 A
Patent Literature 2: Japanese Unexamined Patent Application Publication JP 2006-284141 A

SUMMARY OF THE INVENTION

TECHNICAL PROBLEM

The heat pump hot water heating apparatus disclosed in Patent Literature 1 indirectly controls a hot water flow rate by controlling the return hot water temperature to the target return hot water temperature. As a method of determining the target return hot water temperature, however, only a reference value is described as a guide. To constantly operate the heat pump heating system with high COP, it is necessary to determine the hot water flow rate based on heat radiation characteristics of the heating terminal varied depending on an installation environment such as a residence. Therefore, the hot water flow rate cannot be controlled to constantly maintain the high COP by the method of setting the target return temperature disclosed in Patent Literature 1.

Further, the heating device disclosed in Patent Literature 2 controls the flow rate such that the return temperature becomes the appropriate low temperature not lowering the efficiency of the heat source apparatus. However, when a limit temperature of the appropriate low temperature, and the return temperature and the flow rate set value at the limit temperature are determined in the test operation, the heat radiation limit of the heating terminals is not considered. Accordingly, there is a possibility that the operation with high COP corresponding to a set environment of the heating system including the heating terminals cannot be performed.

To solve the above-described issues, an object of the present invention is to provide a heating system that can perform operation with high COP.

SOLUTION TO THE PROBLEM

A heating system of an embodiment of the present invention includes a heating terminal, a circulation pump, and a heating device that are connected by pipes to configure a heat medium flow path through which heat medium circulates. The heating terminal is configured to cause heat exchange to be performed between air in an air-conditioned space and the heat medium. The circulation pump is configured to apply pressure to the heat medium. The heating device is configured to heat the heat medium.

The heating system includes a supply temperature sensor configured to detect a supply heat medium temperature that is a temperature of the heat medium flowing from the heating device to the heating terminal, a return temperature sensor configured to detect a return heat medium temperature that is a temperature of the heat medium flowing from the heating terminal to the heating device, a room temperature sensor configured to detect a room temperature that is a temperature of the air-conditioned space, and a controller configured to control the heating device and the circulation pump. The controller controls a rotation speed of the circulation pump based on a temperature difference between the return heat medium temperature and the room temperature, and deviation between the supply heat medium temperature and a set target supply heat medium temperature.

ADVANTAGEOUS EFFECTS OF THE INVENTION

According to an embodiment of the present invention, the controller controls the circulation pump to control the hot water flow rate based on comparison of the temperature difference between the return hot water temperature and the room temperature with a heat radiation limit temperature difference and deviation between the supply hot water temperature and the target supply hot water temperature. Therefore, it is possible to operate the heating device with high COP based on heat radiation characteristics of the heating terminal varied depending on the air-conditioned space.

BRIEF DESCRIPTION OF DRAWINGS

FIG. 1    is a diagram illustrating a configuration example of a heating system according to Embodiment 1 of the present invention.
FIG. 2    is a diagram illustrating a relationship between a temperature of water and a heat radiation amount at each of positions of a flow path inside each of heating terminals 8 according to Embodiment 1 of the present invention.
FIG. 3    is a diagram illustrating a relationship between an outside air temperature and a target supply hot water temperature according to Embodiment 1 of the present invention.
FIG. 4    is a diagram illustrating a relationship between the supply hot water temperature and the heat radiation amount of the heating terminals 8 according to Embodiment 1 of the present invention.
FIG. 5    is a diagram illustrating a relationship among various kinds of temperatures when a heat pump device 1 is frequently started and stopped according to Embodiment 1 of the present invention.
FIG. 6    is a diagram illustrating a relationship between a hot water flow rate and the heat radiation amount of each of the heating terminals 8 according to Embodiment 1 of the present invention.
FIG. 7    is a diagram illustrating a relationship between the hot water flow rate and COP of the heat pump device 1 according to Embodiment 1 of the present invention.
FIG. 8    is a diagram illustrating control of the hot water flow rate by a controller 100 according to Embodiment 1 of the present invention.

FIG. 9       is a diagram illustrating a procedure of a method of determining a lower limit flow rate according to Embodiment 1 of the present invention.

FIG. 10     is a diagram illustrating a procedure of a method of determining a heat radiation limit temperature difference according to Embodiment 1 of the present invention.

FIG. 11     is a diagram illustrating a configuration example of a heating system according to Embodiment 2 of the present invention.

FIG. 12     is a diagram illustrating a procedure of a method of determining a lower limit flow rate according to Embodiment 2 of the present invention.

FIG. 13     is a diagram illustrating a configuration example of a heating system according to Embodiment 3 of the present invention.

DESCRIPTION OF EMBODIMENTS

Embodiment 1

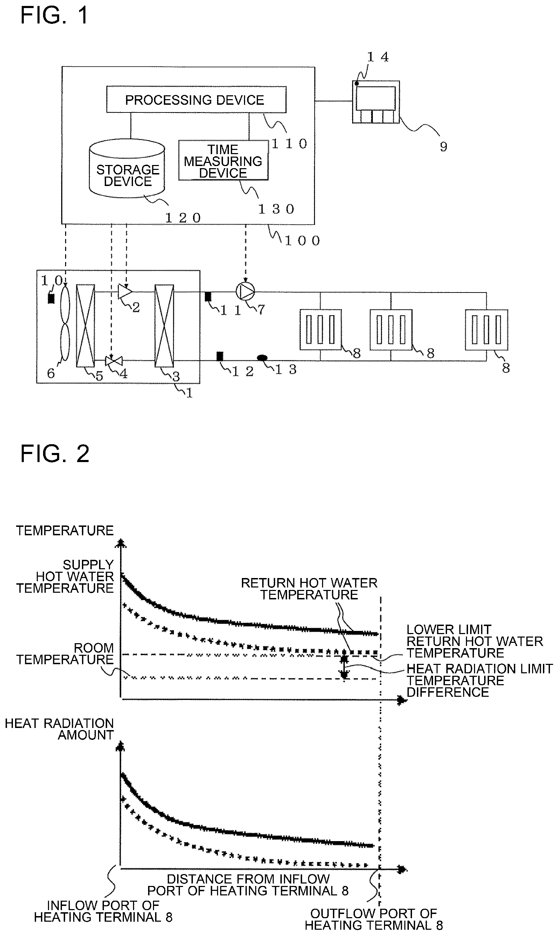

FIG. 1 is a diagram illustrating a configuration example of a heating system according to Embodiment 1 of the present invention. A heat pump hot water heating system is described. As illustrated in FIG. 1, the heat pump hot water heating system of Embodiment 1 includes a heat pump device 1, a circulation pump 7, and heating terminals 8.

The heat pump device 1 in Embodiment 1 serves as a heating device that heats water flowing through a hot water flow path. In this example, water is used as heat medium that is medium delivering heat. Further, description is made assuming that the water circulates through the hot water flow path as a heat medium flow path. The heat medium, however, is not limited thereto. For example, liquid containing antifreeze liquid may circulate as the heat medium. The heat pump device 1 includes a compressor 2, a water-refrigerant heat exchanger 3, an expansion valve 4, an air-refrigerant heat exchanger 5, and a fan 6.

Among them, the compressor 2, a refrigerant-side flow path of the water-refrigerant heat exchanger 3, the expansion valve 4, and the air-refrigerant heat exchanger 5 are connected by pipes to configure a refrigerant circuit through which the refrigerant circulates. The compressor 2 compresses suctioned refrigerant and discharges the compressed refrigerant. Although not particularly limited, the compressor 2 in Embodiment 1 can be optionally changed in driving frequency by, for example, an inverter circuit. The driving frequency of the compressor 2 is controlled by a controller 100 described below. The water-refrigerant heat exchanger 3 functions as a condenser, and exchanges heat between the water flowing through the hot water flow path and the refrigerant flowing through the refrigerant circuit, thereby transferring heat to the water, and heating the water.

The expansion valve 4 serving as a decompression device adjusts a flow rate of the refrigerant, and decompresses and expands the refrigerant. Although not particularly limited, the expansion valve 4 of Embodiment 1 is an electronic expansion valve that can change an opening degree based on an instruction from the controller 100. The air-refrigerant heat exchanger 5 functions as an evaporator, exchanges heat between outdoor air and the refrigerant flowing through the refrigerant circuit, collects heat from the air, and transfers the heat to the refrigerant. The fan 6 sends the outdoor air to the air-refrigerant heat exchanger 5 to promote heat exchange by the air-refrigerant heat exchanger 5.

In Embodiment 1, the air heat pump device 1 collecting heat from the outdoor air is described; however, the heat pump device 1 is not limited thereto. In place of the air-refrigerant heat exchanger 5, a water-refrigerant heat exchanger causing heat exchange to be performed between the heat medium such as water and antifreeze liquid, and the refrigerant may be used. Further, the flow path of the heat medium such as the water and the antifreeze liquid may be in contact with underground, groundwater, river water, or the like, and may collect heat from the underground, the groundwater, the river water, or the like.

Further, in the heat pump hot water heating system of Embodiment 1, a hot water-side flow path of the water-refrigerant heat exchanger 3, the circulation pump 7, and the heating terminals 8 are connected by pipes to configure the hot water flow path through which the water as the heat medium circulates. The circulation pump 7 applies pressure to the water inside the hot water flow path and causes the water to circulate through the hot water flow path. The circulation pump 7 in Embodiment 1 can adjust a rotation speed by optionally changing a driving frequency by, for example, an inverter circuit, and can adjust a flow rate of the water flowing through the hot water flow path.

The rotation speed of the circulation pump 7 is controlled by the controller 100 described below. The heating terminals 8 supply heat of the water inside the hot water flow path to the air of an indoor air-conditioned space. Each of the heating terminals 8 is, for example, a radiator, a floor heater, or a fan coil unit. The radiator is installed on an indoor wall surface, for example, and transfers the heat of the water to indoors through radiant heat. The floor heater is installed in or under a floor, and transfers the heat of the water to indoors through a floor surface. The fan coil unit includes a fan and a heat exchanger, and the fan supplies the air having passed through the heat exchanger, to indoors. The heat pump hot water heating system of Embodiment 1 includes the plurality of heating terminals 8 that are installed in respective rooms of a residence.

Next, a control system apparatus is described. In the heat pump hot water heating system of Embodiment 1, a remote control 9 includes an input device (not illustrated), and transmits a signal including an instruction and setting that have been input by a user, for example, a set room temperature as an indoor set temperature, to the controller 100. Further, the remote control 9 includes a display device (not illustrated), and performs display, etc. based on a signal transmitted from the controller 100. A room temperature sensor 14 detects the temperature of the indoor air-conditioned space, and transmits a signal relating to the detection.

The room temperature sensor 14 is incorporated in the remote control 9, in this example. An outside air temperature sensor 10 detects a temperature of outdoors (hereinafter, referred to as outside air temperature), and transmits a signal relating to the detection. The outside air temperature sensor 10 is provided in the heat pump device 1. A supply temperature sensor 11 detects, in the hot water flow path, a supply hot water temperature (supply heat medium temperature) that is a temperature of the water as the heat medium flowing out from the heat pump device 1, and transmits a signal relating to the detection.

A return temperature sensor 12 detects, in the hot water flow path, a return hot water temperature (return heat medium temperature) that is a temperature of the water as the heat medium returning to the heat pump device 1 after passing through the heating terminals 8, and transmits a signal relating to the detection. A flow rate sensor 13 detects a hot water flow rate (heat medium flow rate) that is a flow rate of the water as the heat medium in the hot water flow path, and transmits a signal relating to the detection.

The controller 100 of the heat pump hot water heating system receives the signals from the various kinds of sensors. Further, the controller 100 controls the compressor 2, the expansion valve 4, and the fan 6 of the heat pump device 1 and the circulation pump 7 of the hot water flow path. The controller 100 of Embodiment 1 includes a processing device 110, a storage device 120, and a time measuring device 130.

The processing device 110 performs processing such as calculation and determination based on data such as the temperature included in each of the signals, and controls the devices. The storage device 120 is a device storing data necessary for a processing device 110 to perform the processing. The time measuring device 130 is a device such as a timer measuring a time and a period necessary for the processing device 110 to perform the processing such as the determination.

The processing device 110 includes, for example, a microcomputer including a control calculation processing device such as a central processing unit (CPU). The storage device 120 includes, for example, a volatile storage device (not illustrated) temporarily storing data, such as a random access memory (RAM), and a nonvolatile auxiliary storage device (not illustrated) such as a hard disk and a flash memory storing data for a long time. The storage device 120 stores program data of a processing procedure performed by the processing device 110.

The control calculation processing device performs and realizes processing based on the program data. However, the processing device is not limited thereto. For example, the device performing the processing may be configured as a dedicated device (hardware). Although the controller 100 is independently installed in FIG. 1, an installation position of the controller 100 is not limited. For example, the heat pump device 1 may include the controller 100.

Next, an amount of heat supplied to each room of the residence as the air-conditioned spaces by the corresponding heating terminal 8 is described. A supply heat amount of heat supplied from the heat pump hot water heating system to a heating load by heating of the heat pump device 1 is expressed by an Expression (1) from a relationship among the supply hot water temperature, the return hot water temperature, and the hot water flow rate. In the Expression (1), Q is the supply heat amount (kW), ρ is density of the hot water ($kg/m^3$), Cp is specific heat (kJ/kgK), Fw is the hot water flow rate ($m^3/s$), Tws is the supply hot water temperature (K), and Twr is the return hot water temperature (K).
Expression 1

$$Q = \rho \cdot Cp \cdot Fw \cdot (Tws - Twr) \quad (1)$$

FIG. 2 is a diagram illustrating a relationship between the water temperature and the heat radiation amount at each of positions of the flow path inside each of the heating terminals 8 according to Embodiment 1 of the present invention. When the water supplied from the heat pump device 1 flows into each of the heating terminals 8, the water temperature and the heat radiation amount at each of positions in the hot water flow path inside each of the heating terminals 8 are varied as illustrated in FIG. 2 as the position approaches a water outflow port in each of the heating terminals 8.

As illustrated in FIG. 2, since the temperature of the water flowing into each of the heating terminals 8 is high, the heat radiation amount is large near an inflow port of each of the heating terminals 8. Then, the water temperature is decreased and the heat radiation amount is also decreased as the position approaches the outflow port of the hot water.

In a case where the supply hot water temperature as the temperature on the water inflow side of each of the heating terminals 8 is decreased, the heat radiation amount at each of the positions of the hot water flow path inside each of the heating terminals 8 is also decreased as a whole. The heat radiation amount from each of the heating terminals 8 is increased/decreased based on a temperature difference between the water temperature and the room temperature. For example, when the temperature difference between the water temperature and the room temperature is small, the heat is hardly radiated.

Accordingly, the temperature difference as a heat exchangeable heat radiation limit is present between the room temperature and the water temperature. The water temperature at which the heat is hardly radiated at the outflow port of each of the heating terminals 8 is a lower limit of the return hot water temperature. The temperature difference between the water temperature and the room temperature at this time is the heat radiation limit temperature difference. The heat radiation limit temperature difference is about 3 °C to about 5 °C as a guide depending on performance of each of the heating terminals 8.

The heat radiation amount of one heating terminal 8 that is a sum of the heat radiation amounts at the respective positions of the hot water flow path inside each of the heating terminals 8 is expressed by an Expression (2). The heat radiation amount is increased when the supply hot water temperature is higher than the room temperature, and is decreased when the supply hot water temperature is lower than the room temperature. In a case where the outside air temperature is varied or the set room temperature is changed, the heat amount necessary for maintenance of the room temperature is varied.

Therefore, to change the heat radiation amount of each of the heating terminals 8, the controller 100 changes the target supply hot water temperature that is a target value of the supply hot water temperature, and controls the supply hot water temperature. The target supply hot water temperature is a target supply heat medium temperature. In the expression, Q is the heat radiation amount (kW) from each of the heating terminals 8, K is the heat transfer rate (W/m$^2$·K) of each of the heating terminals 8, A is a heat transfer area (m$^2$) of each of the heating terminals 8, Tws is the supply hot water temperature (K), and Tr is the room temperature (K).

Expression 2

$$Q = K \cdot A \cdot (Tws - Tr) \qquad \ldots (2)$$

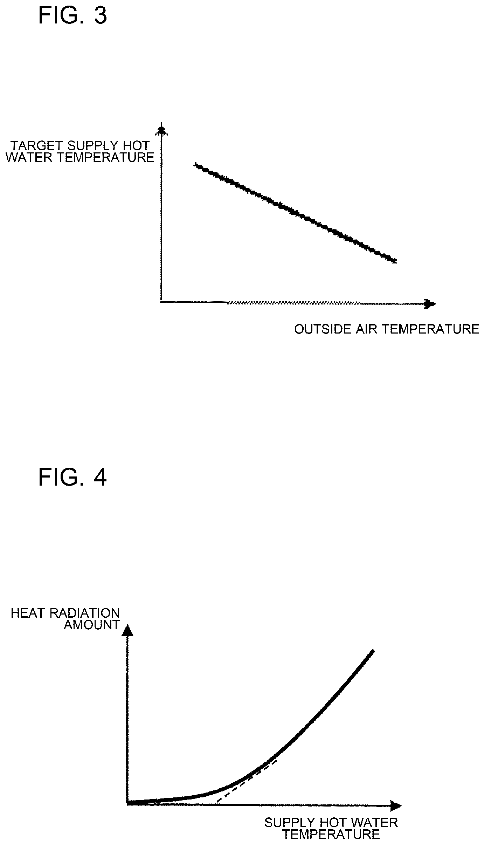

FIG. 3 is a diagram illustrating a relationship between the outside air temperature and the target supply hot water temperature according to Embodiment 1 of the present invention. For example, as illustrated in FIG. 3, when the outside air temperature is low, the supply hot water temperature is increased to increase the heat radiation amount because the heating load is large. In contrast, when the outside air temperature is high, the supply hot water temperature is decreased to decrease the heat radiation amount because the heating load is small. When the set room temperature is increased, the supply hot water temperature is increased to increase the heat radiation amount because the heating load is increased. In contrast, when the set room temperature is decreased, the supply hot water temperature is decreased to decrease the heat radiation amount because the heating load is decreased.

FIG. 4 is a diagram illustrating a relationship between the supply hot water temperature and the heat radiation amount of each of the heating terminals 8 according to Embodiment 1 of the present invention. When the supply hot water temperature is varied, the heat radiation amount of each of the heating terminals 8 is changed as illustrated in FIG. 4. It is understood from FIG. 4 that the water temperature and the heat radiation amount have a substantially proportional relationship in a region of a certain temperature or more. When the water temperature is excessively low, however, the heat radiation amount reaches the heat radiation limit in the middle of the flow path of each of the heating terminals 8. Therefore, almost no heat radiation amount is obtainable.

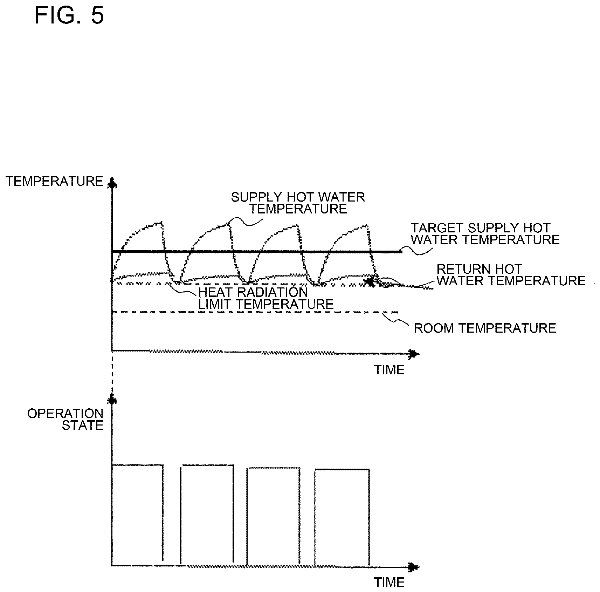

FIG. 5 is a diagram illustrating a relationship among various kinds of temperatures when the heat pump device 1 is frequently started and stopped according to Embodiment 1 of the present invention. When the heat radiation amount is largely decreased, the heat pump device 1 is repeatedly and frequently started and stopped. At this time, the supply hot water temperature is varied as illustrated in FIG. 5. In the heat pump hot water heating system, the controller 100 performs control such that the supply hot water temperature is not largely deviated from the target supply hot water temperature and excess heat amount supply or heat amount supply shortage does not occur. Therefore, when the supply hot water temperature and the target supply hot water temperature are deviated by a predetermined amount or more, the controller 100 starts or stops the heat pump device 1.

For example, when the supply hot water temperature becomes higher by 2 °C than the target supply hot water temperature, the controller 100 determines that amount of supplied heat is excessive, and stops the heat pump device 1. When the heat pump device 1 is stopped, the heat is not supplied to the water. Therefore, the supply hot water temperature is lowered to the return hot water temperature. When the heat is radiated from the pipes and the supply hot water temperature is further decreased with the lapse of time, the controller 100 determines that restart is necessary, and starts the heat pump device 1 to resume the heating.

As described above, when the heat radiation amount of each of the heating terminals 8 is largely decreased, capacity of the heat pump device 1 becomes relatively excessive to thereby cause sudden increase of the supply hot water temperature. This induces start/stop hunting in which start and stop of the heat pump device 1 are repeated. When such repetition of start and stop frequently occurs, a time period when the refrigeration cycle of the heat pump device 1 is unstable is increased. This lowers average COP of the period.

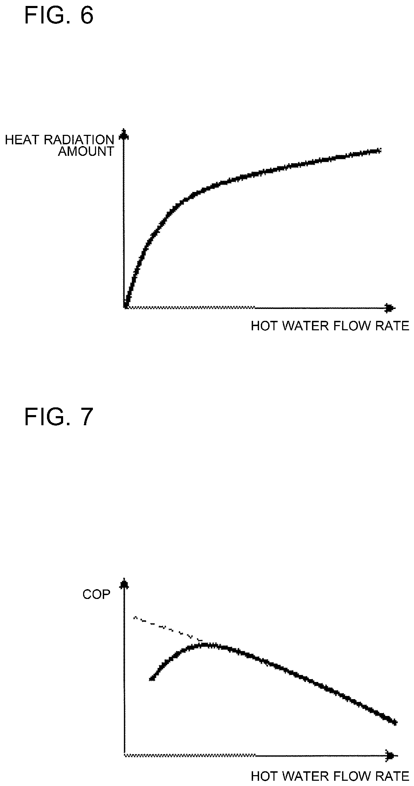

FIG. 6 is a diagram illustrating a relationship between the hot water flow rate and the heat radiation amount of each of the heating terminals 8 according to Embodiment 1 of the present invention. In a case where the rotation speed of the circulation pump 7 is changed to vary the hot water flow rate at the sufficiently-high supply hot water temperature at which the return hot water temperature is not decreased to the heat radiation limit temperature, the heat radiation amount of each of the heating terminals 8 is varied as illustrated in FIG. 6.

When the hot water flow rate is gradually decreased, the heat radiation amount is gently decreased in a region of up to the certain hot water flow rate. Further, in a region of the certain hot water flow rate or less, the heat transfer rate from the hot water to each of the heating terminals 8 is significantly reduced and the heat radiation amount is largely decreased.

When the return hot water temperature is lowered, the controller 100 can reduce a condensing temperature by, for example, reducing the driving frequency of the compressor 2 of the heat pump device 1 to reduce pressure of the refrigerant in the refrigerant circuit. Therefore, the COP of the heat pump device 1 serving as the heating device is generally improved. As a result, in a range of the hot water flow rate at which the heat radiation amount of each of the heating terminals 8 is gently varied, improvement of the COP of the heat pump device 1 exceeds reduction of the heat radiation amount. Therefore, the COP as a whole of the system is increased with reduction in the flow rate.

However, when the hot water flow rate is excessively reduced to a region where the heat radiation amount is largely reduced, the heat supplied from the heat pump device 1 is returned with being little radiated. Therefore, the return hot water temperature is increased to cause sudden increase of the supply hot water temperature, which causes the start/stop hunting as illustrated in FIG. 5.

FIG. 7 is a diagram illustrating a relationship between the hot water flow rate and the COP of the heat pump device 1 according to Embodiment 1 of the present invention. The COP of the heat pump device 1 by reduction of the hot water flow rate is varied as illustrated in FIG. 7. To perform operation with high COP in the heat pump hot water heating system, the characteristics of the heating terminals 8 are grasped from the relationship between the heating terminals 8 and the heat pump device 1 as described above, and a point at which the COP is increased or decreased illustrated in FIG. 7 is found out. Further, the hot water flow rate is set to achieve high COP.

The controller 100 determines the target supply hot water temperature such that the room temperature measured by the room temperature sensor 14 is coincident with the set value. For example, in a case where it is previously known how the supply hot water temperature necessary to maintain the room temperature at the set value is changed by the outside air temperature, an expression that varies the target supply hot water temperature based on the outside air temperature as expressed in an Expression (3) is previously registered. Further, the controller 100 determines the target supply hot water temperature based on the current outside air temperature detected by the outside air temperature sensor 10. In the expression, Twset is the target supply hot water temperature (K), Ta is the outside air temperature (K), and a and b are coefficients.

Expression 3

$$\mathrm{Twset} = a \cdot \mathrm{Ta} + b \qquad \ldots (3)$$

Further, characteristics of the heating terminals 8 and insulating characteristics of the residence may be learned from data obtained by operation, and the target supply hot water temperature may be determined. At this time, the controller 100 performs learning processing based on the data obtained by operation of the system while the characteristics of the heating terminals 8 are regarded as characteristics of one heating terminal 8 obtained by combining the plurality of heating terminals 8. The characteristics of the heating terminals 8 include characteristics varied by the flow rate and characteristics varied by the temperature. Therefore, the system is operated while one condition is fixed and the other condition is varied, to obtain the data.

First, after the target supply hot water temperature is fixed to a temperature (for example, about 45 °C) at which the return hot water temperature does not reach the heat radiation limit, the rotation speed of the circulation pump 7 is reduced from a rated rotation speed, and a relationship between the rotation speed and the hot water flow rate is stored as data in the storage device 120. Then, as expressed in an Expression (4), coefficients in a region where the heat radiation amount is proportionally varied are determined from data of the flow rate and the heat radiation amount by, for example, a least-square method. In this expression, $\gamma$ and $\delta$ are coefficients.

Expression 4

$$Q = \gamma \cdot \mathrm{Fw} + \delta \qquad ..(4)$$

Next, $\alpha$ in an Expression (5) is determined by, for example, a least-square method from data of the supply heat amount of the heat pump device 1 in a case where the target supply hot water temperature is varied while the rotation speed of the circulation pump 7 is maintained at the rated rotation speed. In this example, the characteristics obtained by combining the characteristics of the heating terminals 8 are represented as characteristics of one heating terminal 8. Therefore, as the room temperature, a room temperature of a representative room where the remote control 9 incorporating the room temperature sensor 14 is disposed, is used. Alternatively, when a plurality of remote controls 9 are disposed, an average of the room temperatures of the respective rooms is used as the room temperature. In the expression, $\alpha$ is a heat radiation coefficient of the heating terminals 8.
Expression 5

$$Q = \alpha \cdot (Twset - Tr) \qquad \ldots(5)$$

Further, $\beta$ in an Expression (6) is determined from the data of the room temperature Tr, the outside air temperature Ta, and the supply heat amount Q of the heat pump device 1. In the expression, $\beta$ is a heat radiation coefficient in an installation environment such as a residence.
Expression 6

$$Q = \beta \cdot (Tr - Ta) \qquad \ldots(6)$$

The coefficients determined in the Expressions (4) to (6) are previously stored as data in the storage device 120. Based on the data of the current outside air temperature Ta and the current room temperature Tr, the target supply hot water temperature Twset is finally determined from an Expression (7). In the expression, Qb is the heat radiation amount (kW) at the hot water flow rate at the rated rotation speed determined based on the Expression (4). Further, Qc is a heat radiation amount (kW) at the current hot water flow rate determined from the Expression (4).
Expression 7

$$Twset = \beta/(\alpha \cdot Qc/Qb) \cdot (Tr - Ta) + Tr \qquad \ldots(7)$$

Further, the controller 100 may determine the target supply hot water temperature by the other method under the PI control based on the deviation of the room temperature. An Expression (8) represents an equation about speed digital PI control. In the expression, $\Delta Twset(i)$ is a target supply hot water temperature variation calculated value (K), e(i) is a current room temperature deviation (Trset - Tr(i)), i is a data reference index of the current control period, Trset is a target room temperature (K), Tr(i) is the current room temperature (K), Kp is a proportional gain of the target supply hot water temperature control, Ki is an integration gain of the target supply hot water temperature control, and $\Delta t$ is the control period.
Expression 8

$$\Delta Twset(i) = Kp\{e(i) - e(i - 1)\} + Ki \cdot e(i) \cdot \Delta t \qquad \ldots(8)$$

The controller 100 controls the devices of the heat pump device 1 such that the supply hot water temperature is coincident with the target supply hot water temperature. For example, when the controller 100 determines that the deviation between the target supply hot water temperature and the supply hot water temperature is increased, the controller 100 increases the driving frequency of the compressor 2 and increases the opening degree of the expansion valve 4 as well. As a result, a circulation amount of the refrigerant in the refrigerant circuit is increased, and the heat collection from the outside air is increased to increase the amount of heat supplied to the water.

In contrast, when the controller 100 determines that the deviation is decreased, the controller 100 lowers the driving frequency of the compressor 2 and reduces the opening degree of the expansion valve 4 as well. As a result, the circulation amount of the refrigerant in the refrigerant circuit is reduced, and the heat collection from the outside air is reduced to reduce the amount of heat supplied to the water. A variation of the driving frequency is determined from, for example, the deviation between the supply hot water temperature Two and the target supply hot water temperature Twset based on an Expression (9) under the PI control.

In the expression, $\Delta f(j)$ is a frequency variation calculated value (Hz), e(j) is the current supply hot water temperature deviation (Twset - Tws(j)), j is the data reference index of the current control period, Twset is the target supply hot water temperature (K), Tws(j) is the current supply hot water temperature (K), Kp1 is a proportional gain of the frequency control, Ki1 is an integration gain of the frequency control, and $\Delta t1$ is the control period.

Expression 9

$$\Delta f(j) = Kp1\{e(j) - e(j-1)\} + Ki1 \cdot e(j) \cdot \Delta t1 \qquad \ldots(9)$$

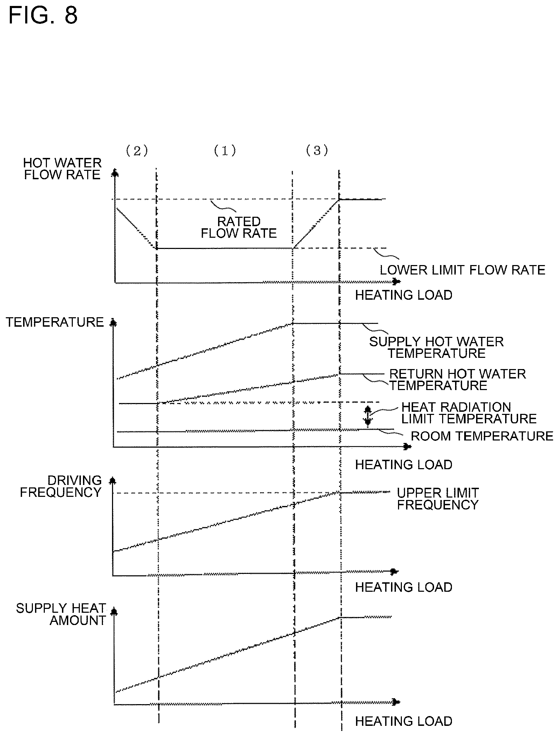

FIG. 8 is a diagram illustrating control of the hot water flow rate by the controller 100 according to Embodiment 1 of the present invention. FIG. 8 illustrates variation of the hot water flow rate, the hot water temperature, the driving frequency of the compressor 2, and the supply heat amount when the heating load is varied. In an operation region (1), the temperature difference between the return hot water temperature and the room temperature is larger than the heat radiation limit temperature difference. In the operation region (1), the return hot water temperature can be maintained at low temperature by reducing the hot water flow rate.

Therefore, the condensing temperature of the heat pump device 1 can be made low, and the COP is improved. Accordingly, in the operation region (1), the hot water flow rate is controlled to coincide with the lower limit flow rate because the deviation between the supply hot water temperature and the target supply hot water temperature is within an allowable range, and the temperature difference between the return hot water temperature and the room temperature is larger than the heat radiation limit temperature difference. At this time, the controller 100 performs control to vary the supply heat amount for the heating terminals 8 based on the variation of the heating load. The supply heat amount for the heating terminals 8 is varied by varying the supply hot water temperature.

In an operation region (2) where the heat load is decreased and the temperature difference between the return hot water temperature and the room temperature reaches the heat radiation limit, start/stop hunting of the heat pump device 1 is induced by decrease of the heat radiation amount of the heating terminals 8. Therefore, the operation is performed while the hot water flow rate is increased. When the hot water flow rate is increased, the temperature difference between the supply hot water temperature and the return hot water temperature per the same heat radiation amount is reduced.

This makes it possible to avoid excess increase of the supply hot water temperature and to prevent the start/stop hunting. In the operation region (2), the target hot water flow rate is determined by using the heat radiation amount determined by the Expression (6) and an Expression (10). Further, the rotation speed of the circulation pump 7 is controlled by the PI control or other control such that the hot water flow rate is coincident with the target hot water flow rate. In the expression, Fwset is the target hot water flow rate ($m^3/s$), and $\Delta Tw - a$ is the heat radiation limit temperature difference (K).

Expression 10

$$Fwset = Q/[\rho Cp \cdot \{Twset - (Tr + \Delta Tw - a)\}] \qquad \ldots(10)$$

In an operation region (3) as a high-load operation region, when the control is performed such that the hot water flow rate is coincident with the lower limit flow rate, the capacity may become insufficient, for example, the supply hot water temperature may not reach the target supply hot water temperature, or it takes a long time to reach the target supply hot water temperature. Therefore, in the operation region (3), when a state where the temperature difference between the return hot water temperature and the room temperature is larger than the heat radiation limit temperature difference and the deviation between the supply hot water temperature and the target supply hot water temperature is larger than the set value continues for a set period, lowering of the room temperature due to the capacity shortage is avoided.

For this purpose, the hot water flow rate is increased until the supply hot water temperature is coincident with the target supply hot water temperature. In other words, the controller 100 controls the rotation speed of the circulation pump 7 by the PI control or other control, based on the deviation of the supply hot water temperature.

By controlling the hot water flow rate in the above-described manner, the controller 100 can maintain the operation of the heat pump device 1 with the high COP in each of the normal operation region, the low-load operation region, and the high-load operation region. In this method, the lower limit flow rate and the heat radiation limit temperature difference are previously determined by the test operation, for example, and are stored as the data in the storage device 120 of the controller 100.

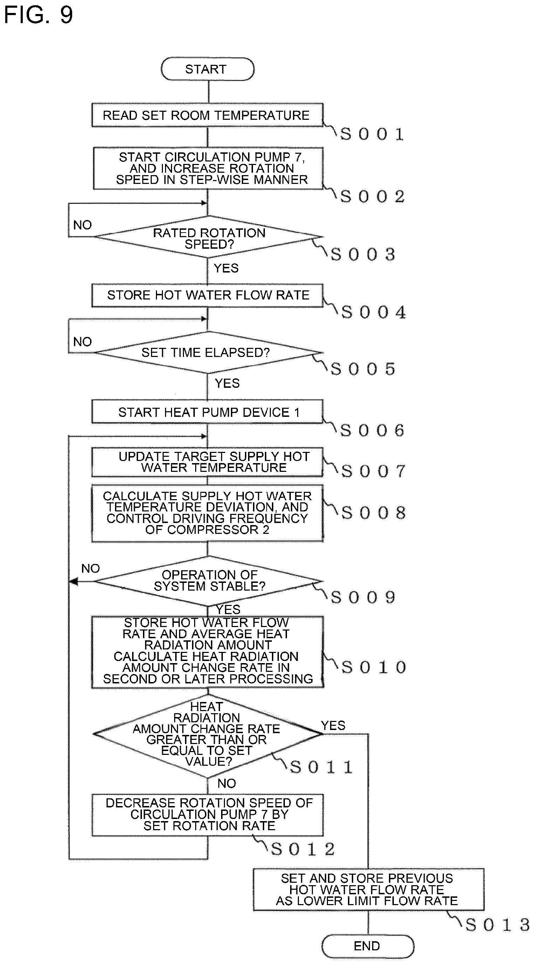

FIG. 9 is a diagram illustrating a procedure of the method of determining the lower limit flow rate according to Embodiment 1 of the present invention. The method of determining the lower limit flow rate performed by the controller 100 is described based on FIG. 9. The processing in the controller 100 is mainly performed by the processing device 110.

Method of Determining Lower Limit Flow Rate

After the heat pump hot water heating system is started, the controller 100 first reads the set room temperature set by the user through the remote control 9 in step S001. In step S002, the controller 100 starts the circulation pump 7 and increases the rotation speed of the circulation pump 7 in a step-wise manner. At this time, when the rotation speed of the circulation pump 7 is rapidly increased to the rated rotation speed, it takes much time to increase the temperature of the hot water because the water cooled during stop of the heating circulates the hot water flow path.

Therefore, the controller 100 increases the rotation speed of the circulation pump 7 in a step-wise manner. When the controller 100 determines in step S003 that the rotation speed of the circulation pump 7 has reached the rated rotation speed, the controller 100 stores the hot water flow rate as data in the storage device 120 in step S004.

When the controller 100 determines in step S005 that the set time has elapsed after the rotation speed of the circulation pump 7 reaches the rated rotation speed, the controller 100 starts the heat pump device 1 in step S006. The set time is several minutes. As an initial driving frequency of the compressor 2 when the controller 100 starts the heat pump device 1, the driving frequency is gradually increased from the minimum driving frequency, or the controller 100 determines the driving frequency of the compressor 2 based on the outside air temperature.

In step S007, the controller 100 calculates the target supply hot water temperature and updates the value. The target supply hot water temperature is calculated by using the Expression (3) or (7). Alternatively, the target supply hot water temperature may be controlled based on the room temperature deviation by the PI control of the Expression (8).

In step S008, the controller 100 calculates the supply hot water temperature deviation from the target supply hot water temperature and the current supply hot water temperature based on the detection by the supply temperature sensor 11. Thereafter, the controller 100 controls the driving frequency of the compressor 2 based on the supply hot water temperature deviation. At this time, the driving frequency of the compressor 2 may be changed based on the supply hot water temperature deviation by the PI control of the Expression (9).

In step S009, the controller 100 determines whether operation of the system is stable. To determine whether the operation is stable, the controller 100 checks whether the room temperature has reached the value of the set room temperature, and an average deviation of the supply hot water temperature in a predetermined period is within a predetermined set range. When the controller 100 determines that the room temperature has not reached the set room temperature or the average deviation of the supply hot water temperature is large, the controller 100 determines that the operation is unstable, and the processing returns to step S007. When the controller 100 determines that the operation is stable, the processing proceeds to step S010.

In step S010, the controller 100 stores the values of the hot water flow rate and an average heat radiation amount in the predetermined period, as the data. The heat radiation amount representing the supply heat amount is calculated by using the above-described Expression (1). In a case where the flow rate is varied for a second and subsequent times, a heat radiation amount change rate $\Delta Q/\Delta Fw$ to the flow rate variation is calculated from a difference between the previous hot water flow rate and the current hot water flow rate and a difference between the previous heat radiation amount and the current heat radiation amount, based on an Expression (11). In this expression, $\Delta Q$ is a variation (kW) of the heat radiation amount, $\Delta Fw$ is a variation of the flow rate (L/min), and k is an index of a current sample value.

Expression 11

$$\Delta Q(k)/\Delta Fw(k) = \{Q(k) - Q(k-1)\}/\{Fw(k) - Fw(k-1)\} \qquad \ldots(11)$$

In step S011, the controller 100 determines whether the heat radiation amount change rate is greater than or equal to a previously set value. The set value is, for example, 10 %. When the controller 100 determines that the heat radiation amount change rate is lower than the set value, the controller 100 decreases the rotation speed of the circulation pump 7 by a predetermined set rotation rate in step S012, and the processing returns to step S007. The set rotation rate is, for example, 10 %.

When the controller 100 determines in step S011 that the heat radiation amount change rate is greater than or equal to the set value, it is determined that the heat transfer rate of the heating terminals 8 is largely reduced because the flow rate is excessively small. Therefore, in step S013, the previous flow rate Fw(k-1) is set as the lower limit flow rate, and is stored as the data. The processing then ends.

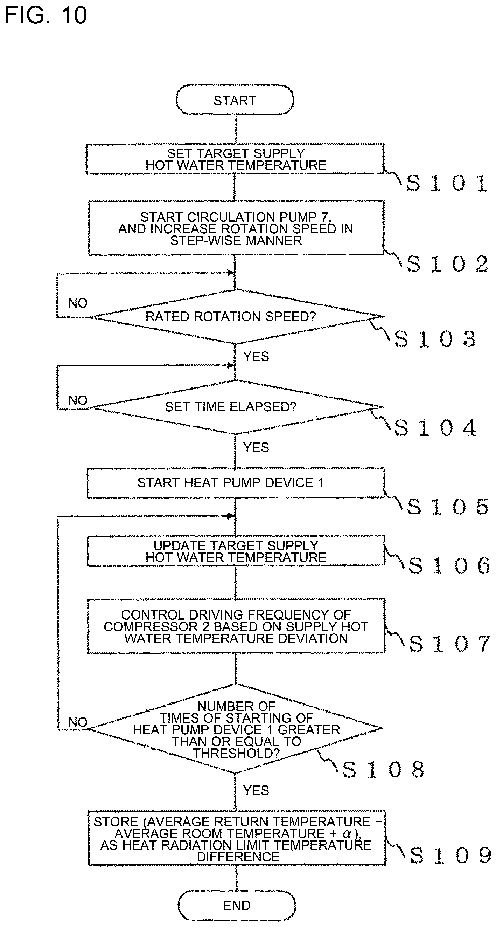

FIG. 10 is a diagram illustrating a procedure of a method of determining the heat radiation limit temperature difference according to Embodiment 1 of the present invention. The method of determining the heat radiation limit temperature difference between the return hot water temperature and the room temperature, performed by the controller 100 is described based on FIG. 10. The processing in the controller 100 is mainly performed by the processing device 110.

Method of Determining Heat Radiation Limit Temperature Difference Between Return Hot Water Temperature and Room Temperature.

In step S101, the controller 100 sets the target supply hot water temperature. The target supply hot water temperature is set to a temperature at which the heat radiation from the heating terminals 8 is sufficiently performable, for example, 45 °C. As in the processing described with reference to FIG. 9, the controller 100 starts the circulation pump 7 and increases the rotation speed of the circulation pump 7 in a step-wise manner in step S102. In step S103, the controller 100 determines that the rotation speed of the circulation pump 7 has reached the rated rotation speed. When the controller 100 further determines in step S104 that a set time has elapsed, the controller 100 starts the heat pump device 1 in step S105.

In step S106, the controller 100 updates the target supply hot water temperature. In second or later update, the update to lower the target supply hot water temperature to a temperature lower than the original temperature in a step-wise manner is performed. The target supply hot water temperature is lowered by, for example, 1 °C. Thereafter, in step S107, the controller 100 controls the driving frequency of the compressor 2 based on the supply hot water temperature deviation.

In step S108, the controller 100 counts, for example, the number of times of starting of the heat pump device 1 in a predetermined period, and determines whether or not the number of times of starting is greater than or equal to a threshold. The predetermined period is set to one hour, and the threshold of the number of times of starting is set to about three to five times. When the controller 100 determines that the number of times of starting in the predetermined period is less than the threshold, the processing returns to step S106.

When the number of times of starting is less than the threshold, it is determined that the temperature difference between the room temperature and the return hot water temperature has not reached the heat radiation limit temperature difference. Therefore, the return hot water temperature can be lowered. When the controller 100 repeats the processing in steps S103 to S105, the supply hot water temperature and the return hot water temperature are decreased.

When the temperature difference between the return hot water temperature and the room temperature reaches the heat radiation limit temperature difference, the heat radiation amount is decreased, and stop and start operation of the heat pump device 1 occurs to increase the number of times of starting. When the controller 100 determines in step S108 that the number of times of starting exceeds the threshold, it is determined that the temperature difference has reached the heat radiation limit temperature difference. Thereafter, in step S109, the controller 100 stores a value obtained by (average return hot water temperature - average room temperature + $\alpha$), as the heat radiation limit temperature difference in the storage device 120. The average return hot water temperature is an average return heat medium temperature, and $\alpha$ is a margin.

In this example, as the determination condition of the heat radiation limit temperature difference, whether the number of times of starting of the heat pump device 1 is greater than the threshold is determined; however, the determination condition of the heat radiation limit temperature difference is not limited thereto. Whether the average supply hot water temperature during the operation of the heat pump device 1 in the predetermined period has been higher by a certain temperature than the target supply hot water temperature may be determined as the determination condition of the heat radiation limit temperature difference. This phenomenon also means that the heat radiation amount of the heating terminals 8 is largely decreased.

As described above, according to the heat pump hot water heating system of Embodiment 1, when the heating load in the heating terminals 8 is low, the return hot water temperature is maintained at a temperature as the heat radiation limit of the heating terminals 8 or more. This makes it possible to prevent frequent occurrence of stop and start of the heat pump device 1 that lowers the efficiency of the heat pump device 1.

In contrast, when the heating load is high, the heat radiation amount of the heating terminals 8 is increased by increasing the hot water flow rate, to avoid shortage of the supply heat amount. In the operation region when the heating load is neither high nor low, the heat pump device 1 can be operated at the lower limit flow rate that is high in efficiency. Accordingly, the high efficiency of the heat pump device 1 can be maintained even under the different load conditions.

Further, according to the heat pump hot water heating system of Embodiment 1, the controller 100 can store, in the storage device 120, the data relating to the inflection point of the hot water flow rate at which the heat radiation efficiency of the heating terminals 8 varied depending on the air-conditioned space is largely lowered. This makes it possible to appropriately set the lower limit hot water flow rate at which the heat pump device 1 as the heating device can be operated with high efficiency.

Further, according to the heat pump hot water heating system of Embodiment 1 according to the claims, the temperature difference that is the heat radiation limit temperature difference of the heating terminals 8 varied depending on a residence is calculated and stored as the data in the storage device 120. This makes it possible to maintain the return hot water temperature at the lower limit temperature or more. Accordingly, the heat pump device 1 as the heating device can be operated with high efficiency.

Embodiment 2

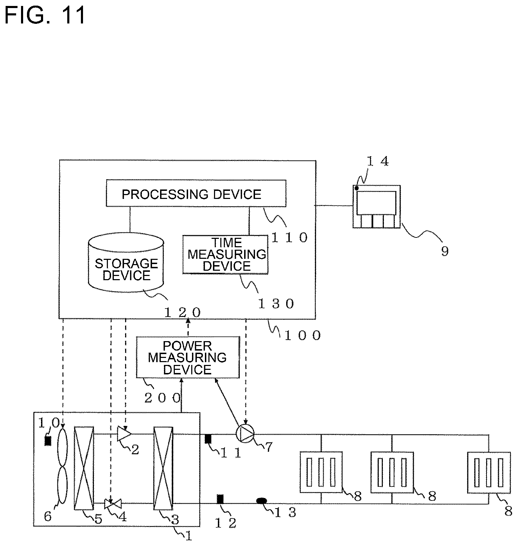

FIG. 11 is a diagram illustrating a configuration example of a heating system according to Embodiment 2 of the present invention. The heat pump hot water heating system of Embodiment 2 further includes a power measuring device 200. The power measuring device 200 measures power consumption of each of the heat pump device 1 and the circulation pump 7. The processing device 110 of the controller 100 calculates a value obtained by dividing the heat radiation amount of the heating terminals 8 by the total power of the heat pump device 1 and the circulation pump 7, and determines an average COP of the entire heat pump hot water heating system in a predetermined period. Further, the lower limit flow rate is determined from change tendency of the COP.

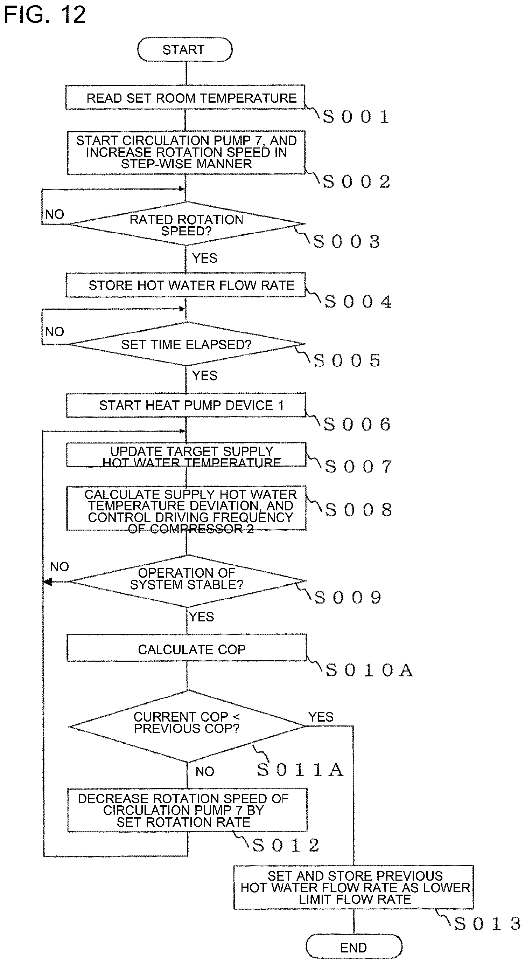

FIG. 12 is a diagram illustrating a procedure of a method of determining the lower limit flow rate according to Embodiment 2 of the present invention. In FIG. 12, the processing denoted by the same step number as that in FIG. 9 is the same processing described in Embodiment 1.

In the method of determining the lower limit flow rate described in Embodiment 1, the controller 100 determines the heat radiation amount change rate as illustrated in FIG. 9. In Embodiment 2, the controller 100 determines the COP in step S010A in place of the heat radiation amount change rate. In step S011A, the controller 100 determines whether the current COP is lower than the previous COP to compare the previous COP and the current COP. When the change of the COP in reduction of the hot water flow rate is turned from increase to decrease as illustrated in FIG. 7 and it is determined that the current COP is lower than the previous COP, the value of the previous hot water flow rate is determined as the lower limit flow rate.

As described above, in the heat pump hot water heating system of Embodiment 2, change in efficiency when the hot water flow rate is reduced can be more directly evaluated. This makes it possible to appropriately set the lower limit flow rate at which the heat pump device 1 as the heating device can be operated with high efficiency. In this example, to determine the COP, the power measuring device 200 directly measures the power consumption; however, the determination of the power consumption is not limited thereto. The power consumption may be indirectly determined from the driving frequency of the compressor 2 based on a functional expression representing a relationship between the driving frequency of the compressor 2 and the power consumption or a data of a table format representing the relationship.

Embodiment 3

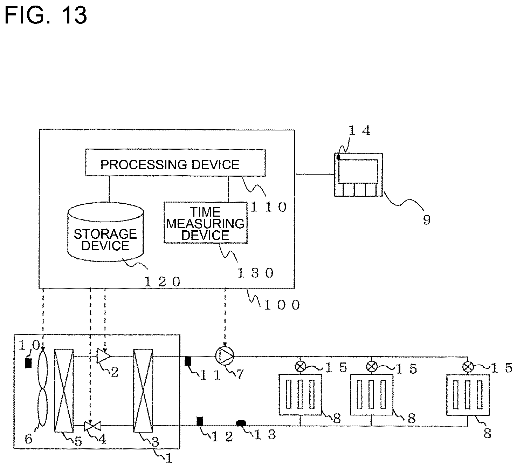

FIG. 13 is a diagram illustrating a configuration example of a heating system according to Embodiment 3 of the present invention. The heat pump hot water heating system of Embodiment 3 further includes flow control valves 15 for the respective heating terminals 8.

The flow control valves 15 are disposed at the inflow ports or the outflow ports of the respective heating terminals 8, and controls the flow rates of the water passing through the respective heating terminals 8 by increasing/decreasing the opening degrees or adjusting the opening degrees in a step-wise manner. The controller 100 controls the opening degrees of the respective flow control valves 15. When the controller 100 determines that the room temperature has reached the set room temperature, the controller 100 reduces the opening degrees of the flow control valves 15 to reduce the hot water flow rates, or closes the flow control valves 15 to prevent the water from passing through the heating terminals 8.

For example, in a case where radiators are used as the heating terminals 8, the control valves called thermostatic radiator valves (TRVs) are used. In a case where the room temperature has reached the desired temperature by the room temperature setting or the hot water temperature setting of the TRVs, the TRVs are closed. When the TRVs are closed, the pressure loss of the whole of the hot water flow path is changed. As a result, the relationship between the rotation speed of the circulation pump 7 and the hot water flow path is changed. At this time, apparent combined heat radiation characteristics of the plurality of heating terminals 8 as viewed from the heat pump device 1 are varied.

At this time, the lower limit flow rate and the heat radiation limit temperature difference when all of the heating terminals 8 are used are not necessarily optimum under a condition where some of the heating terminals 8 are stopped. Therefore, the controller 100 stores, in the storage device 120, a plurality of pieces of data representing the relationship between the rotation speed of the circulation pump 7 and the hot water flow rate. Further, when the controller 100 determines that the relationship has been changed, the controller 100 calculates once again the lower limit flow rate and the heat radiation limit temperature difference after the change, and stores the lower limit flow rate and the heat radiation limit temperature difference after the change, in the storage device 120.

The relationship between the rotation speed of the circulation pump 7 and the hot water flow rate is typically represented by a quadratic expression of an Expression (12). The hot water flow rate when the rotation speed of the circulation pump 7 is changed is stored in the storage device 120, and the controller 100 determines coefficients of the Expression (12) by using a least-square method or other methods. In the expression, Fw is the hot water flow rate (L/min), a and b are coefficients, and Rp is the rotation speed (Hz or rpm) of the circulation pump.

Expression 12

$$Fw = a \cdot Rp2 + b \qquad \dots(12)$$

The controller 100 may not control the opening degrees of the flow control valves 15, and each of the flow control valves 15 may detect the water temperature of the corresponding heating terminal 8 and the corresponding room temperature and autonomously control the opening degree. In this case, the controller 100 determines the relationship between the hot water flow rate in a state where all of the flow control valves 15 are opened and the rotation speed of the circulation pump. In a case where the relationship between the current hot water flow rate and the rotation speed of the circulation pump is different from the relationship when all of the flow control valves are opened, the controller 100 may determine that the relationship between the hot water flow rate and the rotation speed of the circulation pump is changed, calculate the lower limit flow rate and the heat radiation limit temperature difference once again, and store the lower limit flow rate and the heat radiation limit temperature difference in the storage device 120.

Alternatively, a plurality of relationships between the rotation speed of the circulation pump 7 and the hot water flow rate may be previously determined under conditions different in opening/closing state of the flow control valves. Further, the lower limit flow rate and the heat radiation limit temperature difference for each of the relationships may be stored as the data of a table format in the storage device 120 and used in control.

As described above, the heat pump hot water heating system of Embodiment 3 further includes the flow control valves 15 controlling the flow rates of the water passing through the respective heating terminals 8. Closing the flow control valves 15 corresponding to the heating terminals 8 not performing heating changes the relationship between the rotation speed of the circulation pump 7 and the hot water flow rate, and changes the apparent heat radiation characteristics of the heating terminals 8 as viewed from the heat pump device 1.

At this time, the controller 100 calculates once again the lower limit flow rate and the heat radiation limit temperature difference based on the change. Accordingly, even when the heat radiation characteristic of the whole of the heating terminals 8 are varied, it is possible to set the more appropriate lower limit flow rate and the more appropriate heat radiation limit temperature difference.

INDUSTRIAL APPLICABILITY

In Embodiments 1 to 3 described above, the heat pump hot water heating system that includes the refrigerant circuit and uses, as the heating device, the heat pump device 1 performing heating by using the heat pump cycle has been described. Embodiments 1 to 3 described above are applicable to, for example, a heating system that uses another heating device using another heat medium, such as an electric heater controlling the supply heat amount.

REFERENCE SIGNS LIST

| | |
|---|---|
| 1 | heat pump device |
| 2 | compressor |
| 3 | water-refrigerant heat exchanger |
| 4 | expansion valve |
| 5 | air-refrigerant heat exchanger |
| 6 | fan |
| 7 | circulation pump |
| 8 | heating terminal |
| 9 | remote control |
| 10 | outside air temperature sensor |
| 11 | supply temperature sensor |
| 12 | return temperature sensor |
| 13 | flow rate sensor |
| 14 | room temperature sensor |
| 15 | flow control valve |
| 100 | controller |
| 110 | processing device |
| 120 | storage device |
| 130 | time measuring device |
| 200 | power measuring device |

**Claims**

1. A heating system including a heating terminal, a circulation pump, and a heating device that are connected by pipes to configure a heat medium flow path through which heat medium circulates, the heating terminal being configured to cause heat exchange to be performed between air in an air-conditioned space and the heat medium, the circulation pump being configured to apply pressure to the heat medium, the heating device being configured to heat the heat medium,
the heating system comprising:

   - a supply temperature sensor configured to detect a supply heat medium temperature that is a temperature of the heat medium flowing from the heating device to the heating terminal;
   - a return temperature sensor configured to detect a return heat medium temperature that is a temperature of the heat medium flowing from the heating terminal to the heating device;
   - a room temperature sensor configured to detect a room temperature that is a temperature of the air-conditioned space; and
   - a controller configured to control the heating device and the circulation pump,

   wherein
   the controller controls a rotation speed of the circulation pump based on a temperature difference between the return heat medium temperature and the room temperature, and deviation between the supply heat medium temperature and a set target supply heat medium temperature.

2. The heating system of claim 1,
   wherein
   when the controller determines that the temperature difference between the return heat medium temperature and the room temperature is decreased to a heat radiation limit temperature difference at which heat exchange is performable in the heating terminal, the controller controls the circulation pump to increase a heat medium flow rate that is a flow rate of the heat medium flowing through the heat medium flow path,
   when the controller determines that a state where the temperature difference between the return heat medium temperature and the room temperature is larger than the heat radiation limit temperature difference and the deviation between the supply heat medium temperature and the target supply heat medium temperature is larger than a set value continues for a predetermined set period, the controller controls the circulation pump to increase the heat medium flow rate until the supply heat medium temperature reaches the target supply heat medium temperature, and when the controller determines that the deviation between the supply heat medium temperature and the target supply heat medium temperature is within a set range and the temperature difference between the return heat medium temperature and the room temperature is larger than the heat radiation limit temperature difference, the controller controls the circulation pump to control the heat medium flow rate at a lower limit flow rate.

3. The heating system of claim 2,
   wherein the controller reduces the rotation speed of the circulation pump from a rated rotation speed while maintaining the supply heat medium temperature constant, and when the controller determines that a heat radiation amount change rate that represents a ratio of variation of a supply heat amount to a variation of the heat medium flow rate becomes a previously set value, the controller sets the heat medium flow rate when the heat radiation amount change rate becomes the set value, as the lower limit flow rate.

4. The heating system of claim 2,
   further comprising a power measuring device configured to measure power consumption of each of the heating device and the circulation pump, wherein the controller reduces the rotation speed of the circulation pump from a rated rotation speed to reduce the heat medium flow rate while maintaining the supply heat medium temperature constant, and sets, as the lower limit flow rate, the heat medium flow rate at an inflection point at which a COP determined from a relationship between a supply heat amount and the power consumption relative to the heat medium flow rate is changed from increase to decrease.

5. The heating system of any one of claims 2 to 4,
   wherein the controller reduces the supply heat medium temperature while maintaining the heat medium flow rate constant, and counts number of times of starting of the heating device in a previously set period, and in a case where the number of times of starting becomes a predetermined value, the controller sets the heat radiation limit temperature difference based on a temperature difference between an average return heat medium temperature in the previously set period and the room temperature.

6. The heating system of any one of claims 2 to 4,
wherein the controller includes a storage device storing a plurality of pieces of data relating to the lower limit flow rate and the heat radiation limit temperature differences, and
when the controller determines that a relationship between the rotation speed of the circulation pump and the heat medium flow rate is changed, the controller stores, in the storage device, the lower limit flow rate and the heat radiation limit temperature difference in operation after the relationship is changed.

7. The heating system of any one of claims 1 to 6,
wherein the heating device is a heat pump device including a compressor, a condenser, a decompression device, and an evaporator that are connected by pipes to configure a refrigeration circuit through which refrigerant circulates, the compressor being configured to compress suctioned refrigerant, the condenser being configured to condense the refrigerant by heat exchange, the decompression device being configured to decompress the condensed refrigerant, the evaporator being configured to evaporate the decompressed refrigerant by heat exchange.

# FIG. 1

# FIG. 2

FIG. 3

FIG. 4

## FIG. 5

FIG. 6

HEAT RADIATION AMOUNT

HOT WATER FLOW RATE

FIG. 7

COP

HOT WATER FLOW RATE

# FIG. 8

## FIG. 9

```
                    ( START )

        READ SET ROOM TEMPERATURE
                                        S 0 0 1

        START CIRCULATION PUMP 7,
        AND INCREASE ROTATION
        SPEED IN STEP-WISE MANNER
                                        S 0 0 2

  NO          RATED ROTATION
              SPEED?
                                        S 0 0 3
                    YES

        STORE HOT WATER FLOW RATE
                                        S 0 0 4

  NO          SET TIME ELAPSED?
                                        S 0 0 5
                    YES

        START HEAT PUMP DEVICE 1
                                        S 0 0 6

        UPDATE TARGET SUPPLY HOT
        WATER TEMPERATURE
                                        S 0 0 7

        CALCULATE SUPPLY HOT WATER
        TEMPERATURE DEVIATION, AND
        CONTROL DRIVING FREQUENCY
        OF COMPRESSOR 2
                                        S 0 0 8

  NO          OPERATION OF
              SYSTEM STABLE?
                                        S 0 0 9
                    YES

        STORE HOT WATER FLOW
        RATE AND AVERAGE HEAT
        RADIATION AMOUNT
        CALCULATE HEAT RADIATION
        AMOUNT CHANGE RATE IN
        SECOND OR LATER PROCESSING
                                        S 0 1 0

              HEAT
              RADIATION
          AMOUNT CHANGE RATE        YES
          GREATER THAN OR
              EQUAL TO SET
              VALUE?
                                        S 0 1 1
                    NO

        DECREASE ROTATION SPEED OF
        CIRCULATION PUMP 7 BY
        SET ROTATION RATE
                                        S 0 1 2

        SET AND STORE PREVIOUS
        HOT WATER FLOW RATE
        AS LOWER LIMIT FLOW RATE
                                        S 0 1 3

                    ( END )
```

# FIG. 10

```
              ┌──────────────┐
              │    START     │
              └──────┬───────┘
                     │
        ┌────────────────────────────┐
        │     SET TARGET SUPPLY      │
        │  HOT WATER TEMPERATURE     │ ～S101
        └────────────┬───────────────┘
                     │
        ┌────────────────────────────┐
        │   START CIRCULATION PUMP 7, │
        │ AND INCREASE ROTATION SPEED IN │ ～S102
        │      STEP-WISE MANNER       │
        └────────────┬───────────────┘
                     │
   NO      ╱◇─────────────────◇╲
  ◄────────  RATED ROTATION SPEED?  ～S103
            ╲◇─────────────────◇╱
                     │ YES
   NO      ╱◇─────────────────◇╲
  ◄────────   SET TIME ELAPSED?     ～S104
            ╲◇─────────────────◇╱
                     │ YES
        ┌────────────────────────────┐
        │   START HEAT PUMP DEVICE 1  │ ～S105
        └────────────┬───────────────┘
                     │
        ┌────────────────────────────┐
        │     UPDATE TARGET SUPPLY    │ ～S106
        │   HOT WATER TEMPERATURE     │
        └────────────┬───────────────┘
                     │
        ┌────────────────────────────┐
        │ CONTROL DRIVING FREQUENCY OF │
        │ COMPRESSOR 2 BASED ON SUPPLY HOT │ ～S107
        │ WATER TEMPERATURE DEVIATION │
        └────────────┬───────────────┘
                     │
   NO        ╱◇─────────────────◇╲
  ◄──────────   NUMBER OF
             TIMES OF STARTING OF
            HEAT PUMP DEVICE 1 GREATER  ～S108
              THAN OR EQUAL TO
                THRESHOLD?
             ╲◇─────────────────◇╱
                     │ YES
        ┌────────────────────────────┐
        │ STORE (AVERAGE RETURN TEMPERATURE – │
        │  AVERAGE ROOM TEMPERATURE + α), │ ～S109
        │ AS HEAT RADIATION LIMIT TEMPERATURE │
        │         DIFFERENCE          │
        └────────────┬───────────────┘
                     │
              ┌──────────────┐
              │     END      │
              └──────────────┘
```

FIG. 11

## FIG. 12

START

READ SET ROOM TEMPERATURE — S001

START CIRCULATION PUMP 7, AND INCREASE ROTATION SPEED IN STEP-WISE MANNER — S002

RATED ROTATION SPEED? — S003
NO
YES

STORE HOT WATER FLOW RATE — S004

SET TIME ELAPSED? — S005
NO
YES

START HEAT PUMP DEVICE 1 — S006

UPDATE TARGET SUPPLY HOT WATER TEMPERATURE — S007

CALCULATE SUPPLY HOT WATER TEMPERATURE DEVIATION, AND CONTROL DRIVING FREQUENCY OF COMPRESSOR 2 — S008

OPERATION OF SYSTEM STABLE? — S009
NO
YES

CALCULATE COP — S010A

CURRENT COP < PREVIOUS COP? — S011A
YES
NO

DECREASE ROTATION SPEED OF CIRCULATION PUMP 7 BY SET ROTATION RATE — S012

SET AND STORE PREVIOUS HOT WATER FLOW RATE AS LOWER LIMIT FLOW RATE — S013

END

FIG. 13

## INTERNATIONAL SEARCH REPORT

International application No.

PCT/JP2018/048154

A. CLASSIFICATION OF SUBJECT MATTER
Int.Cl. F24D3/00(2006.01)i

According to International Patent Classification (IPC) or to both national classification and IPC

B. FIELDS SEARCHED

Minimum documentation searched (classification system followed by classification symbols)
Int.Cl. F24D3/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2017-9189 A (MITSUBISHI ELECTRIC CORPORATION) 12 January 2017, paragraphs [0011]-[0054], fig. 1-6<br>& EP 3312515 A1, paragraphs [0014]-[0057], fig. 1-6 | 1, 7<br>2-6 |
| Y<br>A | Microfilm of the specification and drawings annexed to the request of Japanese Utility Model Application No. 111741/1980 (Laid-open No. 36504/1982) (TOKYO SHIBAURA ELECTRIC CO., LTD.) 26 February 1982, specification, page 3, line 10 to page 11, line 6, fig. 1<br>(Family: none) | 1, 7<br>2-6 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18.03.2019 | 26.03.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/048154 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2017/081764 A1 (MITSUBISHI ELECTRIC CORPORATION) 18 May 2017, paragraphs [0010]-[0051], fig. 1-5 (Family: none) | 1-7 |
| A | JP 2012-180965 A (DAIKIN INDUSTRIES, LTD.) 20 September 2012, paragraphs [0036]-[0063], fig. 1-3 (Family: none) | 1-7 |
| A | JP 2001-241677 A (CORONA CORPORATION) 07 September 2001, paragraphs [0030]-[0064], fig. 1 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012163275 A

- JP 2006284141 A